# EUROPÄISCHE PATENTANMELDUNG

(11) **EP 3 495 404 A1**
(43) Veröffentlichungstag der Anmeldung: **12.06.2019**
(21) Anmeldenummer: 17205850.5
(22) Anmeldetag: 07.12.2017
(51) Int. Cl.: C08G 18/76, C08G 18/79, C08G 18/12, C08G 18/20, C08G 18/30, C08G 18/32, C08G 18/42, C08G 101/00

(54) **POLYURETHANSCHAUM**

(71) Anmelder: BASF SE, 67056 Ludwigshafen am Rhein (DE)
(72) Erfinder: KARAPETYAN, Gnuni, 51067 Köln (DE); ORTALDA, Marco, 14019 Villanova d'Asti AT (IT)
(74) Vertreter: Herzog, Fiesser & Partner Patentanwälte PartG mbB

(57) **Zusammenfassung**

Die vorliegende Erfindung betrifft einen Polyurethanschaum erhältlich oder erhalten durch Umsetzung von mindestens den Komponenten (i) bis (v): (i) eine Polyisocyanatzusammensetzung; (ii) eine Polyolzusammensetzung; (iii) eine Treibmittelzusammensetzung; (iv) eine Stabilisatorzusammensetzung umfassend mindestens 2,2-Bis(chlormethyl)trimethylen-bis(bis(2-chlorethyl)-phosphat); (v) eine Katalysatorzusammensetzung umfassend mindestens ein tertiäres Amin.

## Beschreibung

Die vorliegende Erfindung betrifft einen Polyurethanschaum erhältlich oder erhalten durch Umsetzung von mindestens den Komponenten (i) bis (v): (i) eine Polyisocyanatzusammensetzung; (ii) eine Polyolzusammensetzung; (iii) eine Treibmittelzusammensetzung; (iv) eine Stabilisatorzusammensetzung umfassend mindestens 2,2-Bis(chlormethyl)trimethylen-bis(bis(2-chlorethyl)phosphat); (v) eine Katalysatorzusammensetzung umfassend mindestens ein tertiäres Amin.

Schuhbestandteile, insbesondere Schuhsohlen bestehen oftmals aus Polyurethanschäumen, welche auf Polyestern basieren. Ein verbreitetes Problem solcher Polyurethanschäume ist die thermische Degradation (Depolymerisation), da diese die Qualität der Schuhsole nachhaltig beeinträchtigt. Dickere Schuhsohlen, welche keine Nägel/Bolzen im Hacken enthalten, weisen eine innere Erweichung auf, was von den Trägern der Schuhe als nachteilig empfunden wird. Für Schuhwerk, welches höheren Belastungen ausgesetzt ist, wie beispielsweise Sicherheitsschuhwerk, ist die thermische Instabilität der Polyurethanmatrix ein kritischer Punkt. Die WO 2009/065826 A1 beschreibt die Inhibierung der Degradation durch Einsatz von Tris(2-chlorethyl)phosphat (TCPP). Im Hinblick auf die wachsenden Bedenken gegen die Verwendung von TCPP - so wurde TCPP bereits für die Verwendung in Spielzeugen verboten - besteht weiterhin ein Bedarf nach TCPP-Alternativen als Stabilisatoren für Polyurethanschäume für Schuhwerk. Die WO 2014/16167 A1 beschreibt die Verwendung von 2,2-Bis(chlormethyl)trimethylen-bis(bis(2-chlorethyl)phosphat) (Celltech 61) in Polyurethan-Schäumen in Verbindung mit einbaubaren Aminkatalysatoren, d.h. Aminen, welche freie Aminogruppen oder Hydroxylgruppen aufweisen. Nachteilig an derartigen einbaubaren Katalysatoren ist, dass ihr Einsatz in den meisten Fällen zu einer Verschlechterung der mechanischen Eigenschaften führt.

Aufgabe der vorliegenden Erfindung war es daher, einen TCPP-freien Polyurethanschaum bereitzustellen, welcher die oben genannten Nachteile überwindet. Insbesondere sollte ein Polyurethanschaum bereitgestellt werden, welcher stabil gegenüber thermischer Degradation ist.

Erfindungsgemäß wurde diese Aufgabe gelöst mit einem Polyurethanschaum erhältlich oder erhalten durch Umsetzung von mindestens den Komponenten (i) bis (v):
(i) eine Polyisocyanatzusammensetzung;
(ii) eine Polyolzusammensetzung;
(iii) eine Treibmittelzusammensetzung;
(iv) eine Stabilisatorzusammensetzung umfassend mindestens 2,2-Bis(chlormethyl)-trimethylen-bis(bis(2-chlorethyl)phosphat);
(v) eine Katalysatorzusammensetzung umfassend mindestens ein tertiäres Amin.

Für den gemeinsamen Einsatz einer Stabilisatorzusammensetzung umfassend mindestens 2,2-Bis(chlormethyl)trimethylen-bis(bis(2-chlorethyl)phosphat) und einer Katalysatorzusammensetzung umfassend mindestens ein tertiäres Amin zeigt sich eine deutlich verbesserte Stabilität gegenüber thermischer Degradation (Depolymerisation).

Unter einem Polyurethanschaum wird ein Schaum gemäß DIN 7726 verstanden. Prinzipiell gibt es keine Beschränkungen hinsichtlich der Art der Schaumherstellung. Vorzugsweise wird der erfindungsgemäße Polyurethanschaum mittels eines Verfahrens ausgewählt aus der Gruppe bestehend aus reaktivem Schäumen, insbesondere Spritzguss, und Extrusionsschäumen erzeugt, wobei die Verfahren kontinuierlich oder diskontinuierlich durchgeführt werden können.

Die erfindungsgemäßen Polyurethanschäume umfassen Elastomerschäume, flexible Schäume, Halbhartschäume und Hartschäume. Details zu diesen Schaumtypen können dem "Kunststoffhandbuch, Band 7, Polyurethane", Carl Hanser Verlag, 3. Auflage, 1993, Kapitel 5 bis 6 entnommen werden. Die erfindungsgemäßen Polyurethanschäume umfassen ebenfalls Integralschäume, wobei Integralschäume Polyurethanschäume gemäß DIN 7726 sind, welche eine Randzone aufweisen, in welcher die Dichte höher als im Kern ist, als Resultat des Formungsprozesses. Die Gesamtdichte gemittelt über den Kern und die Randzone liegt bevorzugt oberhalb von 100 g/l. Im Sinne der vorliegenden Erfindung können Integral-PU-Schäume wiederrum Elastomerschäume, flexible Schäume, Halbhartschäume und Hartschäume sein. Weitere Details zu den erfindungsgemäßen Integral-PU-Schäumen sind dem "Kunststoffhandbuch, Band 7, Polyurethane", Carl Hanser Verlag, 3. Auflage, 1993, Kapitel 7 zu entnehmen.

In einer bevorzugten Ausführungsform des Polyurethanschaums weist das mindestens eine tertiäre Amin der Katalysatorzusammensetzung gemäß (v) keine gegenüber Isocyanaten reaktive Funktionalität, bevorzugt keine Funktionalität ausgewählt aus der Gruppe bestehend aus Hydroxylgruppe, primärer Aminogruppe und sekundärer Aminogruppe, weiter bevorzugt keine primäre oder sekundäre Aminogruppe. Gemäß einer besonders bevorzugten Ausführungsform enthält die Katalysatorzusammensetzung gemäß (v) keine Funktionalität ausgewählt aus der Gruppe bestehend aus primäre oder sekundäre Aminogruppe, bevorzugt keine Funktionalität ausgewählt aus der Gruppe bestehend aus Hydroxylgruppe, primärer Aminogruppe und sekundärer Aminogruppe, weiter bevorzugt keine Komponente, welche gegenüber Isocyanaten eine reaktive Funktionalität aufweist. Gemäß einer weiter bevorzugten Ausführungsform besteht die Katalysatorzusammensetzung gemäß (v) aus dem mindestens einen tertiären Amin. Das mindestens eine tertiäre Amin umfasst hierbei ein tertiäres Amin oder eine Mischung von zwei oder mehr tertiären Aminen. In einer bevorzugten Ausführungsform des Polyurethanschaums ist das mindestens eine tertiäre Amin der Katalysatorzusammensetzung gemäß (v) ausgewählt ist aus der Gruppe bestehend aus Tributylamin, Triethanolamin, Triisopropanolamin, N-methyl-diethanolamin, N-ethyl-diethanolamin, N,N-dimethylethanolamin, N-methyl-morpholin, N-ethyl-morpholin, N,N,N',N'-tetramethyl-ethylendiamin, Pentamethyldiethylentriamin; 1,4-Diaza-bicyclo-(2,2,2)-octan (Triethylendiamin, DABCO, TEDA), 1,8-Diazabicyclo[5.4.0]undec-7-en (DBU), N-methyl-N'-dimethylaminoethylpiperazin, Bis-(dimethylaminoalkyl)-piperazin, N,N-Dimethylbenzylamin, N,N-Di-methylcyclohexylamin, N,N-Diethylbenzylamin, Bis-(N,N-diethylaminoethyl)adipat, N,N,N',N'-Tetramethyl-1,3-butandiamin, N,N-Dimethyl-beta-phenylethylamin, Bis-(dimethyl-aminopropyl)harnstoff und 1,2-Dimethylimidazol, bevorzugt 1,4-Diaza-bicyclo-(2,2,2)-octan oder 1,8-Diazabicyclo[5.4.0]undec-7-en, weiter bevorzugt mindestens 1,4-Diaza-bicyclo-(2,2,2)-octan. Das mindestens eine tertiäre Amin wird unprotoniert oder in protonierter Form eingesetzt. In "protonierter Form" bedeutet, dass das mindestens eine tertiäre Amin in Mischung mit mindestens einer Säure, welche bevorzugt aus der Gruppe der Dicarbonsäuren ausgewählt ist, bevorzugt in Mischung mit Sebacinsäure, eingesetzt wird. Das molare Verhältnis von Säure zum tertiären Amin liegt bevorzugt im Bereich von 0,01:1 bis 1:1, weiter bevorzugt im Bereich von 0,05:1 bis 1:1, weiter bevorzugt im Bereich von 0,1:1 bis 1:1, weiter bevorzugt im Bereich von 0,2:1 bis 1:1.

In einer bevorzugten Ausführungsform des Polyurethanschaums ist die Katalysatorzusammensetzung gemäß (v) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) enthalten.

Erfindungsgemäß wird eine Stabilisatorzusammensetzung (iv) eingesetzt, welche mindestens 2,2-Bis(chlormethyl)trimethylen-bis(bis(2-chlorethyl)phosphat) umfasst. In einer bevorzugten Ausführungsform des Polyurethanschaums ist das 2,2-Bis(chlormethyl)trimethylen-bis(bis(2-chlorethyl)phosphat) der Stabilisatorzusammensetzung gemäß (iv) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) enthalten.

Erfindungsgemäß wird weiterhin eine Treibmittelzusammensetzung (iii) eingesetzt, welche bevorzugt mindestens ein Treibmittel aufweist. Dabei ist es im Rahmen der vorliegenden Erfindung möglich, chemische oder physikalische Treibmittel einzusetzen oder Mischungen davon. Diese Treibmittel sind beispielhaft im "Kunststoffhandbuch, Band 7, Polyurethane", Carl Hanser Verlag, 3. Auflage, 1993, Kapitel 3.4.5, beschrieben. Als physikalische Treibmittel können Substanzen, vorzugsweise nicht reagierende Flüssigkeiten, eingesetzt werden, die bei der Herstellung des Schaums verdampfen. Geeignet sind beispielsweise Butan oder Pentan. Als chemische Treibmittel werden solche Substanzen eingesetzt, die bei der Herstellung des Schaums durch Reaktion mit dem Isocyanat Gase abspalten, insbesondere Wasser und Carbonsäurensäuren bzw. Carbonsäurederivate, beispielsweise Hydrogencitrate, Hydrogencarbonate oder Azodicarbonamide, wie Celegoene®, Tracel®, Hydrocerol®, wobei Wasser ein bevorzugtes Treibmittel ist. Gemäß einer bevorzugten Ausführungsform umfasst die Treibmittelzusammensetzung gemäß (iii) daher mindestens Wasser.

Erfindungsgemäß wird weiterhin eine Polyolzusammensetzung (ii) eingesetzt, welche bevorzugt mindestens ein Polyester- oder Polyetherpolyol umfasst. Erfindungsgemäß kann die Polyolzusammensetzung auch zwei oder mehr Polyester- oder Polyetherpolyole bzw. deren Mischungen umfassen. Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Erfindungsgemäß werden Polyesterpolyole (Polyesterole) oder Polyetherpolyole (Polyetherole) als Polyole eingesetzt. Ebenso könnten Polycarbonate eingesetzt werden. Auch Copolymere könnten im Rahmen der vorliegenden Erfindung eingesetzt werden.

Gemäß einer bevorzugten Ausführungsformen umfasst die Polyolzusammensetzung gemäß (ii) mindestens ein Polyester- oder Polyetherpolyol, bevorzugt mindestens ein zwei bis sechs funktionales Polyester- oder Polyetherpolyol, weiter bevorzugt mindestens ein zwei bis sechs funktionales Polyesterpolyol, weiter bevorzugt mindestens ein zweifunktionales aliphatisches Polyesterpolyol. Unter einem "xx-funktionalen Polyester- oder Polyetherpolyol" wird ein nominal xx-funktionales Polyester- oder Polyetherpolyol verstanden. In der Praxis wird von der nominalen Funktionalität abgewichen, da verschiedene Nebenreaktionen während der Polyol-Synthese zu einer Funktionalität führen können, die real niedriger sein kann als nominal angenommen. Bevorzugt ist das mindestens eine aliphatische Polyesterpolyol zweifunktional, d.h. es weist eine mittlere Funktionalität zwischen 1,8 und 2,3, bevorzugt zwischen 1,9 und 2,2, insbesondere 2, auf. Bevorzugt weisen die erfindungsgemäß eingesetzten Polyester- oder Polyetherpolyole nur primäre Hydroxylgruppen auf.

Geeignete Polyesterpolyole sind dem Fachmann an sich bekannt. Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure. Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250 °C, vorzugsweise 180 bis 220 °C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die eingesetzten Polyesterpolyole besitzen vorzugsweise eine OH-Zahl im Bereich von 5 bis 500 mg KOH/g, vorzugsweise im Bereich von 10 bis 200 mg KOH/g, weiter bevorzugt im Bereich von 30 bis 100 mg KOH/g.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid oder Borfluorid-Etherat oder durch Basen wie z.B. Kaliumhydroxid aus einem oder mehreren Alkylenoxiden mit 2 bis 4 Kohlenstoffatomen im Alkylenrest. Geeignete Alkylenoxide sind beispielsweise, 1,3-Propylenoxid, 1,2- bzw. 2,3-Butylenoxid und vorzugsweise Ethylenoxid und 1,2-Propylenoxid. Des Weiteren kann Tetrahydrofuran als Monomer eingesetzt werden. Weiter können als Katalysatoren auch Multimetallcyanidverbindungen, so genannte DMC-Katalysatoren, eingesetzt werden. Die Alkylenoxide können einzeln, alternierend nacheinander oder als Mischungen verwendet werden. Bevorzugt werden 1,2-Propylenoxid, Ethylenoxid und Mischungen aus 1,2-Propylenoxid und Ethylenoxid, wobei das Ethylenoxid in Mengen von 1 bis 50 % eingesetzt wird und weiter bevorzugt als Ethylenoxid-Endblock eingesetzt wird ("EO-cap"), so dass die entstehenden Polyole zu über 70 % primäre OH-Endgruppen aufweisen. In einer besonders bevorzugten Ausführungsform werden Mischungen von Startermolekülen verwendetet, so dass die mittlere Anzahl an reaktiven Wasserstoffatome der Startermoleküle zwischen 2 bis 6 liegt. Als Startermolekül kommen vorzugsweise Wasser oder 2- bis 8-wertige Alkohole, wie Ethylenglykol, 1,2- und 1,3-Propandiol, Diethylenglykol, Dipropylenglykol, 1,4-Butandiol, Glycerin oder Trimethylolpropan, Pentaerythrit, Zuckeralkohole wie Sorbitol oder Zucker wie Saacherose, aminische Verbindungen wie z.B. Ethylendiamin, Diethanolamin oder Toluoldiamin oder Mischungen der Startermoleküle in Betracht.

Die eingesetzten Polyetherpolyole besitzen vorzugsweise eine OH-Zahl im Bereich von 5 bis 500 mg KOH/g, vorzugsweise im Bereich von 10 bis 200 mg KOH/g, weiter bevorzugt im Bereich von 30 bis 100 mg KOH/g.

In manchen Fällen werden auch Polymerpolyoldispersionen (auch "Graft-Polyole" genannt) eingesetzt. Als Polyole der Polyolzusammensetzung gemäß (ii) eignen sich ferner polymermodifizierte Polyole, vorzugsweise polymermodifizierte Polyesterole oder Polyetherole.

Erfindungsgemäß wird weiterhin eine Polyisocyanatzusammensetzung (i) eingesetzt, welche bevorzugt mindestens ein Polyisocyanate enthält. Erfindungsgemäß kann die Polyisocyanatzusammensetzung auch zwei oder mehr Polyisocyanate enthalten.

Als Polyisocyanate können aliphatische, cycloaliphatische, araliphatische und/oder aromatische Diisocyanate eingesetzt werden. Im Einzelnen seien beispielhaft die folgenden aromatischen Isocyanate genannt: 2,4-Toluol-diisocyanat, Gemische aus 2,4- und 2,6-Toluol-diisocyanat (TDI), 4,4'-, 2,4'- und/oder 2,2'-Diphenylmethan-diisocyanat (MDI), Gemische aus 2,4'- und 4,4'-Diphenylmethan-diisocyanat, urethan-, carbodiimid- oder uretonim-modifizierte flüssige 4,4'- und/oder 2,4-Diphenylmethan-diisocyanate, 4,4'-Diisocyanato-diphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat oder Prepolymere aus diesen Isocyanaten und Polyolen oder Isocyanaten und isocyanatreaktiven Komponenten verwendet werden. Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethylbutylendiisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat oder Prepolymere dieser Isocyanate. Bevorzugt umfasst die Polyisocyanatzusammensetzung gemäß (i) mindestens ein Diisocyanat, welches bevorzugt ausgewählt ist aus der Gruppe bestehend aus aliphatischen, cycloaliphatischen, araliphatischen und aromatischen Diisocyanaten, weiter bevorzugt mindestens Diphenylmethandiisocyanat (MDI).

Erfindungsgemäß werden die Komponenten (i) bis (iii) in einem Verhältnis enthalten sind, so dass das molare Verhältnis aus der Summe der Funktionalitäten der eingesetzten Polyolzusammensetzung (ii) und der Treibmittelzusammensetzung (iii) zu der Summe der Funktionalitäten der eingesetzten Polyisocyanatzusammensetzung (i) im Bereich von 0,4:1 bis 1,2:1, bevorzugt im Bereich von 0,5:1 bis 1,1:1, weiter bevorzugt im Bereich von 0,6:1 bis 1,05:1, besonders bevorzugt im Bereich von 0,7:1 bis 1:1 liegt.

Erfindungsgemäß können bei der Umsetzung der Komponenten (i) bis (v) weitere Additive zugesetzt werden, beispielsweise Hilfs- und Zusatzstoffe.

Gemäß einer bevorzugten Ausführungsform des Polyurethanschaums ist weiterhin eine Kettenverlängererzusammensetzung (vi) enthalten. Diese umfasst bevorzugt Kettenverlängerungsmittel und/oder Vernetzungsmittel. Diese Substanzen werden bevorzugt mit einem Molekulargewicht von vorzugsweise kleiner 450 g/mol, besonders bevorzugt von 60 bis 400 g/mol eingesetzt, wobei Kettenverlängerer zwei gegenüber Isocyanaten reaktive Gruppen und Vernetzungsmittel 3 gegenüber Isocyanat reaktive Gruppen aufweisen. Diese können bevorzugt einzeln oder in Form von Mischungen eingesetzt werden. Dabei ist im Rahmen der vorliegenden Erfindung auch die Polyolzusammensetzung gemäß (ii) frei von derartigen Verbindungen. Erfindungsgemäß können Kettenverlängerer eingesetzt werden, die für die Herstellung von Polyurethanen bekannt sind. Mögliche, niedermolekulare Kettenverlängerer sind beispielsweise in "Kunststoffhandbuch, Band 7, Polyurethane" Carl Hanser Verlag, 3. Auflage, 1993, Kapitel 3.2 und 3.3.2 genannt. Vorzugsweise werden Diole und/oder Triole mit Molekulargewichten kleiner als 400 g/mol, besonders bevorzugt von 60 bis 300 g/mol und insbesondere 60 bis 150 g/mol eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol, Tripropylenglycol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Ferner können als Kettenverlängerer auch aromatische Amine wie z.B. Diethyltoluoldiamin, 3,3'-Dichloro-4,4'-diaminodiphenylmethan, 3,5-Diamino-4-chlorisobutylbenzoat, 4-Methyl-2,6-bis(methylthio)-1,3-diaminobenzol, Trimethylenglykol-di-p-aminobenzoat, 2,4-Diamino-3,5-di(methylthio)toluol verwendet werden. Solche aromatischen aminischen Kettenverlängerer sind von verschiedenen Herstellern zu beziehen und dem Fachmann meist auch unter diversen Abkürzungen wie z.B. MOCA, MBOCA, MCDEA, DETA bekannt. Besonders bevorzugt wird als Kettenverlängerer eine Verbindung eingesetzt, welche zwei gegenüber Isocyanaten reaktive Wasserstoffatome aufweist, bevorzugt ausgewählt aus der Gruppe bestehend aus 1,4-Butandiol, Monoethylenglykol, Diethylenglykol und 1,6-Hexandiol, Dipropylenglycol und Tripropylenglycol, weiter bevorzugt mindestens Monoethylenglykol.

Sonstige Hilfs- und/oder Zusatzstoffe sind dem Fachmann an sich bekannt. Geeignete Hilfs- und Zusatzstoffe können beispielsweise dem Kunststoffhandbuch, Band 7, Carl Hanser Verlag, München 1966 (S. 103-113) entnommen werden. Als Hilfs- und Zusatzstoffe genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher.

### Herstellungsverfahren

In einem weiteren Aspekt betrifft die vorliegende Erfindung auch ein Verfahren zur Herstellung eines Polyurethans, insbesondere eines Polyurethanschaums, umfassend die Umsetzung mindestens der Komponenten (i), (ii), (iii), (iv) und (v):
(i) eine Polyisocyanatzusammensetzung;
(ii) eine Polyolzusammensetzung;
(iii) eine Treibmittelzusammensetzung;
(iv) eine Stabilisatorzusammensetzung umfassend mindestens 2,2-Bis(chlormethyl)trimethylen-bis(bis(2-chlorethyl)phosphat);
(v) eine Katalysatorzusammensetzung umfassend mindestens ein tertiäres Amin.

In einer bevorzugten Ausführungsform des Verfahrens zur Herstellung eines Polyurethans, insbesondere eines Polyurethanschaums, weist das mindestens eine tertiäre Amin der Katalysatorzusammensetzung gemäß (v) keine gegenüber Isocyanaten reaktive Funktionalität, bevorzugt keine Funktionalität ausgewählt aus der Gruppe bestehend aus Hydroxylgruppe, primärer Aminogruppe und sekundärer Aminogruppe, weiter bevorzugt keine primäre oder sekundäre Aminogruppe, aufweist. Gemäß einer besonders bevorzugten Ausführungsform enthält die Katalysatorzusammensetzung gemäß (v) keine Funktionalität ausgewählt aus der Gruppe bestehend aus primäre oder sekundäre Aminogruppe, bevorzugt keine Funktionalität ausgewählt aus der Gruppe bestehend aus Hydroxylgruppe, primärer Aminogruppe und sekundärer Aminogruppe, weiter bevorzugt keine Komponente, welche gegenüber Isocyanaten eine reaktive Funktionalität aufweist. Gemäß einer weiter bevorzugten Ausführungsform besteht die Katalysatorzusammensetzung gemäß (v) aus dem mindestens einen tertiären Amin. Das mindestens eine tertiäre Amin umfasst hierbei ein tertiäres Amin oder eine Mischung von zwei oder mehr tertiären Aminen. In einer bevorzugten Ausführungsform des Polyurethanschaums ist das mindestens eine tertiäre Amin der Katalysatorzusammensetzung gemäß (v) ausgewählt ist aus der Gruppe bestehend aus Tributylamin, Tri-ethanolamin, Triisopropanolamin, N-methyl-diethanolamin, N-ethyl-diethanolamin, N,N-dimethylethanolamin, N-methyl-morpholin, N-ethyl-morpholin, N,N,N',N'-tetramethyl-ethylendiamin, Pentamethyldiethylentriamin; 1,4-Diaza-bicyclo-(2,2,2)-octan (Triethylendiamin, DABCO, TEDA), 1,8-Diazabicyclo[5.4.0]undec-7-en (DBU), N-methyl-N'-dimethylaminoethylpiperazin, Bis-(dimethylaminoalkyl)-piperazin, N,N-Dimethylbenzylamin, N,N-Di-methylcyclohexylamin, N,N-Diethylbenzylamin, Bis-(N,N-diethylaminoethyl)adipat, N,N,N',N'-Tetramethyl-1,3-butandiamin, N,N-Dimethyl-beta-phenylethylamin, Bis-(dimethyl-aminopropyl)harnstoff und 1,2-Dimethylimidazol, bevorzugt 1,4-Diaza-bicyclo-(2,2,2)-octan oder 1,8-Diazabicyclo[5.4.0]undec-7-en, weiter bevorzugt mindestens 1,4-Diaza-bicyclo-(2,2,2)-octan umfasst. Das mindestens eine tertiäre Amin wird unprotoniert oder in protonierter Form eingesetzt. In "protonierter Form" bedeutet, dass das mindestens eine tertiäre Amin in Mischung mit mindestens einer Säure, welche bevorzugt aus der Gruppe der Dicarbonsäuren ausgewählt ist, bevorzugt in Mischung mit Sebacinsäure, eingesetzt wird. Das molare Verhältnis von Säure zum tertiären Amin liegt bevorzugt im Bereich von 0,01:1 bis 1:1, weiter bevorzugt im Bereich von 0,05:1 bis 1:1, weiter bevorzugt im Bereich von 0,1:1 bis 1:1, weiter bevorzugt im Bereich von 0,2:1 bis 1:1.

In einer bevorzugten Ausführungsform des Verfahrens zur Herstellung eines Polyurethans, insbesondere eines Polyurethanschaums, ist die Katalysatorzusammensetzung gemäß (v) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) enthalten.

Erfindungsgemäß wird in dem Verfahren zur Herstellung eines Polyurethans, insbesondere eines Polyurethanschaums, eine Stabilisatorzusammensetzung (iv) eingesetzt, welche mindestens 2,2-Bis(chlormethyl)trimethylen-bis(bis(2-chlorethyl)phosphat) umfasst. In einer bevorzugten Ausführungsform des Polyurethanschaums ist das 2,2-Bis(chlormethyl)trimethylen-bis(bis(2-chlorethyl)phosphat) der Stabilisatorzusammensetzung gemäß (iv) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) enthalten.

Erfindungsgemäß wird in dem Verfahren zur Herstellung eines Polyurethans, insbesondere eines Polyurethanschaums, weiterhin eine Treibmittelzusammensetzung (iii) eingesetzt, welche bevorzugt mindestens ein Treibmittel aufweist. Dabei ist es im Rahmen der vorliegenden Erfindung möglich, chemische oder physikalische Treibmittel einzusetzen oder Mischungen davon. Diese Treibmittel sind beispielhaft im "Kunststoffhandbuch, Band 7, Polyurethane", Carl Hanser Verlag, 3. Auflage, 1993, Kapitel 3.4.5, beschrieben. Als physikalische Treibmittel können Substanzen, vorzugsweise nicht reagierende Flüssigkeiten, eingesetzt werden, die bei der Herstellung des Schaums verdampfen. Geeignet sind beispielsweise Butan oder Pentan. Als chemische Treibmittel werden solche Substanzen eingesetzt, die bei der Herstellung des Schaums durch Reaktion mit dem Isocyanat Gase abspalten, insbesondere Wasser und Carbonsäurensäuren bzw. Carbonsäurederivate, beispielsweise Hydrogencitrate, Hydrogencarbonate oder Azodicarbonamide, wie Celegoene®, Tracel®, Hydrocerol®, wobei Wasser ein bevorzugtes Treibmittel ist. Gemäß einer bevorzugten Ausführungsform umfasst die Treibmittelzusammensetzung gemäß (iii) daher mindestens Wasser.

Erfindungsgemäß wird in dem Verfahren zur Herstellung eines Polyurethans, insbesondere eines Polyurethanschaums, weiterhin eine Polyolzusammensetzung (ii) eingesetzt, welche bevorzugt mindestens ein Polyester- oder Polyetherpolyol umfasst. Erfindungsgemäß kann die Polyolzusammensetzung auch zwei oder mehr Polyester- oder Polyetherpolyole bzw. deren Mischungen umfassen. Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Erfindungsgemäß werden Polyesterpolyole (Polyesterole) oder Polyetherpolyole (Polyetherole) als Polyole eingesetzt. Ebenso könnten Polycarbonate eingesetzt werden. Auch Copolymere könnten im Rahmen der vorliegenden Erfindung eingesetzt werden.

Gemäß einer bevorzugten Ausführungsformen des Verfahrens zur Herstellung eines Polyurethans, insbesondere eines Polyurethanschaums, umfasst die Polyolzusammensetzung gemäß (ii) mindestens ein Polyester- oder Polyetherpolyol, bevorzugt mindestens ein zwei bis sechs funktionales Polyester- oder Polyetherpolyol, weiter bevorzugt mindestens ein zwei bis sechs funktionales Polyesterpolyol, weiter bevorzugt mindestens ein zweifunktionales aliphatisches Polyesterpolyol. Unter einem "xx-funktionalen Polyester- oder Polyetherpolyol" wird ein nominal xx-funktionales Polyester- oder Polyetherpolyol verstanden. In der Praxis wird von der nominalen Funktionalität abgewichen, da verschiedene Nebenreaktionen während der Polyol-Synthese zu einer Funktionalität führen können, die real niedriger sein kann als nominal angenommen. Bevorzugt ist das mindestens eine aliphatische Polyesterpolyol zweifunktional, d.h. es weist eine mittlere Funktionalität zwischen 1,8 und 2,3, bevorzugt zwischen 1,9 und 2,2, insbesondere 2, auf. Bevorzugt weisen die erfindungsgemäß eingesetzten Polyester- oder Polyetherpolyole nur primäre Hydroxylgruppen auf.

Geeignete Polyesterpolyole sind dem Fachmann an sich bekannt. Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.
Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250 °C, vorzugsweise 180 bis 220 °C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die eingesetzten Polyesterpolyole besitzen vorzugsweise eine OH-Zahl im Bereich von 5 bis 500 mg KOH/g, vorzugsweise im Bereich von 10 bis 200 mg KOH/g, weiter bevorzugt im Bereich von 30 bis 100 mg KOH/g.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid oder Borfluorid-Etherat oder durch Basen wie z.B. Kaliumhydroxid aus einem oder mehreren Alkylenoxiden mit 2 bis 4 Kohlenstoffatomen im Alkylenrest. Geeignete Alkylenoxide sind beispielsweise, 1,3-Propylenoxid, 1,2- bzw. 2,3-Butylenoxid und vorzugsweise Ethylenoxid und 1,2-Propylenoxid. Des Weiteren kann Tetrahydrofuran als Monomer eingesetzt werden. Weiter können als Katalysatoren auch Multimetallcyanidverbindungen, so genannte DMC-Katalysatoren, eingesetzt werden. Die Alkylenoxide können einzeln, alternierend nacheinander oder als Mischungen verwendet werden. Bevorzugt werden 1,2-Propylenoxid, Ethylenoxid und Mischungen aus 1,2-Propylenoxid und Ethylenoxid, wobei das Ethylenoxid in Mengen von 1 bis 50 % eingesetzt wird und weiter bevorzugt als Ethylenoxid-Endblock eingesetzt wird ("EO-cap"), so dass die entstehenden Polyole zu über 70 % primäre OH-Endgruppen aufweisen. In einer besonders bevorzugten Ausführungsform werden Mischungen von Startermolekülen verwendetet, so dass die mittlere Anzahl an reaktiven Wasserstoffatome der Startermoleküle zwischen 2 bis 6 liegt. Als Startermolekül kommen vorzugsweise Wasser oder 2- bis 8-wertige Alkohole, wie Ethylenglykol, 1,2- und 1,3-Propandiol, Diethylenglykol, Dipropylenglykol, 1,4-Butandiol, Glycerin oder Trimethylolpropan, Pentaerythrit, Zuckeralkohole wie Sorbitol oder Zucker wie Saacherose, aminische Verbindungen wie z.B. Ethylendiamin, Diethanolamin oder Toluoldiamin oder Mischungen der Startermoleküle in Betracht.

Die eingesetzten Polyetherpolyole besitzen vorzugsweise eine OH-Zahl im Bereich von 5 bis 500 mg KOH/g, vorzugsweise im Bereich von 10 bis 200 mg KOH/g, weiter bevorzugt im Bereich von 30 bis 100 mg KOH/g.

In manchen Fällen werden auch Polymerpolyoldispersionen (auch "Graft-Polyole" genannt) eingesetzt. Als Polyole der Polyolzusammensetzung gemäß (ii) eignen sich ferner polymermodifizierte Polyole, vorzugsweise polymermodifizierte Polyesterole oder Polyetherole.

Erfindungsgemäß wird in dem Verfahren zur Herstellung eines Polyurethans, insbesondere eines Polyurethanschaums, weiterhin eine Polyisocyanatzusammensetzung (i) eingesetzt, welche bevorzugt mindestens ein Polyisocyanat enthält. Erfindungsgemäß kann die Polyisocyanatzusammensetzung auch zwei oder mehr Polyisocyanate enthalten.

Als Polyisocyanate können aliphatische, cycloaliphatische, araliphatische und/oder aromatische Diisocyanate eingesetzt werden. Im Einzelnen seien beispielhaft die folgenden aromatischen Isocyanate genannt: 2,4-Toluol-diisocyanat, Gemische aus 2,4- und 2,6-Toluol-diisocyanat (TDI), 4,4'-, 2,4'- und/oder 2,2'-Diphenylmethan-diisocyanat (MDI), Gemische aus 2,4'- und 4,4'-Diphenylmethan-diisocyanat, urethan-, carbodiimid- oder uretonim-modifizierte flüssige 4,4'- und/oder 2,4-Diphenylmethan-diisocyanate, 4,4'-Diisocyanato-diphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat oder Prepolymere aus diesen Isocyanaten und Polyolen oder Isocyanaten und isocyanatreaktiven Komponenten verwendet werden. Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat, 4,4'-, 2,4'- und/oder 2,2'-Dicyclohexylmethan-diisocyanat oder Prepolymere dieser Isocyanate. Bevorzugt umfasst die Polyisocyanatzusammensetzung gemäß (i) mindestens ein Diisocyanat, welches bevorzugt ausgewählt ist aus der Gruppe bestehend aus aliphatischen, cycloaliphatischen, araliphatischen und aromatischen Diisocyanaten, weiter bevorzugt mindestens Diphenylmethandiisocyanat (MDI).

Erfindungsgemäß werden in dem Verfahren zur Herstellung eines Polyurethans, insbesondere eines Polyurethanschaums, die Komponenten (i) bis (iii) in einem Verhältnis enthalten sind, so dass das molare Verhältnis aus der Summe der Funktionalitäten der eingesetzten Polyolzusammensetzung (ii) und der Treibmittelzusammensetzung (iii) zu der Summe der Funktionalitäten der eingesetzten Polyisocyanatzusammensetzung (i) im Bereich von 0,4:1 bis 1,1:1, bevorzugt im Bereich von 0,5:1 bis 1,05:11, weiter bevorzugt im Bereich von 0,6:1 bis 1:1, liegt.

Erfindungsgemäß können bei der Umsetzung der Komponenten (i) bis (v) weitere Additive zugesetzt werden, beispielsweise Hilfs- und Zusatzstoffe.

Gemäß einer bevorzugten Ausführungsform des Verfahrens zur Herstellung eines Polyurethans, insbesondere eines Polyurethanschaums, wird weiterhin eine Kettenverlängererzusammensetzung (vi) eingesetzt. Diese umfasst bevorzugt Kettenverlängerungsmittel und/oder Vernetzungsmittel. Diese Substanzen werden bevorzugt mit einem Molekulargewicht von vorzugsweise kleiner 450 g/mol, besonders bevorzugt von 60 bis 400 g/mol eingesetzt, wobei Kettenverlängerer zwei gegenüber Isocyanaten reaktive Gruppen und Vernetzungsmittel 3 gegenüber Isocyanat reaktive Gruppenaufweisen. Diese können bevorzugt einzeln oder in Form von Mischungen eingesetzt werden. Dabei ist im Rahmen der vorliegenden Erfindung auch die Polyolzusammensetzung gemäß (ii) frei von derartigen Verbindungen. Erfindungsgemäß können Kettenverlängerer eingesetzt werden, die für die Herstellung von Polyurethanen bekannt sind. Mögliche, niedermolekulare Kettenverlängerer sind beispielsweise in "Kunststoffhandbuch, Band 7, Polyurethane" Carl Hanser Verlag, 3. Auflage, 1993, Kapitel 3.2 und 3.3.2 genannt. Vorzugsweise werden Diole und/oder Triole mit Molekulargewichten kleiner als 400 g/mol, besonders bevorzugt von 60 bis 300 g/mol und insbesondere 60 bis 150 g/mol eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol, Tripropylenglycol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Ferner können als Kettenverlängerer auch aromatische Amine wie z.B. Diethyltoluoldiamin, 3,3'-Dichloro-4,4'-diaminodiphenylmethan, 3,5-Diamino-4-chlorisobutylbenzoat, 4-Methyl-2,6-bis(methylthio)-1,3-diaminobenzol, Trimethylenglykol-di-p-aminobenzoat, 2,4-Diamino-3,5-di(methylthio)toluol verwendet werden. Solche aromatischen aminischen Kettenverlängerer sind von verschiedenen Herstellern zu beziehen und dem Fachmann meist auch unter diversen Abkürzungen wie z.B. MOCA, MBOCA, MCDEA, DETA bekannt. Besonders bevorzugt wird als Kettenverlängerer eine Verbindung eingesetzt, welche zwei gegenüber Isocyanaten reaktive Wasserstoffatome aufweist, bevorzugt ausgewählt aus der Gruppe bestehend aus 1,4-Butandiol, Monoethylenglykol, Diethylenglykol und 1,6-Hexandiol, Dipropylenglycol und Tripropylenglycol, weiter bevorzugt mindestens Monoethylenglykol.

Sonstige Hilfs- und/oder Zusatzstoffe sind dem Fachmann an sich bekannt. Geeignete Hilfs- und Zusatzstoffe können beispielsweise dem Kunststoffhandbuch, Band 7, Carl Hanser Verlag, München 1966 (S. 103-113) entnommen werden. Als Hilfs- und Zusatzstoffe genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher.

Eine bevorzugte Ausführungsform betrifft ein Verfahren zur Herstellung eines Polyurethans, insbesondere eines Polyurethanschaums, wobei
(a) Polyisocyanatzusammensetzung (i), gegebenenfalls ein Teil der Polyolzusammensetzung (ii) und mindestens ein Teil der Stabilisatorzusammensetzung (iv) vermischt und zu einem isocyanatterminierten Prepolymer umgesetzt werden, und
(b) das erhaltene isocyanatterminierte Prepolymer gemäß (a) mit der Polyolzusammensetzung (ii) bzw. gegebenenfalls dem verbliebenen Teil der Polyolzusammensetzung (ii), Treibmittel (iii), gegebenenfalls dem verbliebenen Teil der Stabilisatorzusammensetzung (iv) und der Katalysatorzusammensetzung (v) vermischt und, gegebenenfalls in einer Form, zum Polyurethanschaum ausreagiert werden.

Eine weiter bevorzugte Ausführungsform betrifft ein Verfahren zur Herstellung eines Polyurethans, insbesondere eines Polyurethanschaums, wobei
(a.1) Polyisocyanatzusammensetzung (i) und Stabilisatorzusammensetzung (iv) vermischt und zu einem isocyanatterminierten Prepolymer umgesetzt werden, und
(b.1) das erhaltene isocyanatterminierte Prepolymer gemäß (a.1) mit der Polyolzusammensetzung (ii), Treibmittel (iii) und der Katalysatorzusammensetzung (v) vermischt und, gegebenenfalls in einer Form, zum Polyurethanschaum ausreagiert werden.

Das erhaltene isocyanatterminierte Prepolymer gemäß (a) bzw. (a.1) weist bevorzugt einen NCO-Gehalt im Bereich von 1 bis 30 %, bevorzugt im Bereich von 5 bis 25 %, weiter bevorzugt im Bereich von 6 bis 23 %, weiter bevorzugt im Bereich von 10 bis 22 %, besonders bevorzugt im Bereich von 12 bis 21 %, auf.

Die erfindungsgemäßen Polyurethanschaumstoffe bzw. Polyurethanschaumstoffformkörper werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7.

Die Ausgangskomponenten (i) bis (v) bzw. das isocyanatterminierte Prepolymer gemäß (a) bzw. (a.1) und die verbleibenden Komponenten werden dazu vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160°C, vorzugsweise 30 bis 120 °C, besonders bevorzugt 30 bis 60 °C. Dabei wird im Rahmen der Erfindung die Mischung der Komponenten bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper, insbesondere Integralschaumstoffe, eine Dichte von 150 g/l bis 450 g/l. aufweisen. Die Verdichtungsgrade zur Herstellung der erfindungsgemäßen Polyurethanintegralschaumstoffe liegen im Bereich von 1,1 bis 8,5, vorzugsweise von 1,7 bis 7,0.

Alternativ kann die Reaktionsmischung auch frei, beispielsweise in Wannen oder auf einem Band, zu einem Polyurethanschaum verschäumt werden. In dieser Alternative umfasst das Herstellungsverfahren weiterhin bevorzugt die Ausformung eines Formkörpers aus dem freigeschäumten Polyurethanschaum. Das Ausformen des Polyurethanschaums erfolgt dabei beispielsweise durch Schneiden, Stanzen, Schälen und/oder Thermoformen, gegebenenfalls zusammen mit weiteren Materialien.

Die Erfindung betrifft weiterhin einen Polyurethanschaum erhältlich oder erhalten nach dem zuvor beschriebenen Verfahren.

Gegenstand der Erfindung ist weiterhin die Verwendung eines Polyurethanschaums wie zuvor beschrieben oder eines Polyurethanschaums erhalten oder erhältlich nach dem Verfahren wie zuvor beschrieben, zur Herstellung eines Schuhs oder Schuhbestandteils, bevorzugt Schuhsohle oder Bestandteil einer Schuhsohle.

Weiterhin ist Gegenstand der Erfindung ein Schuh oder Schuhbestandteil, bevorzugt Schuhsohle oder Bestandteil einer Schuhsohle, umfassend einen Polyurethanschaum wie zuvor beschrieben oder eines Polyurethanschaums erhalten oder erhältlich nach dem Verfahren wie zuvor beschrieben.

Die erfindungsgemäßen Polyurethanschäume werden vorzugsweise als Schuhsohle und besonders bevorzugt als (Zwischen-)Sohle, zum Beispiel für Straßenschuhe, Sportschuhe, Sandalen und Stiefel eingesetzt. Insbesondere werden die erfindungsgemäßen Polyurethanschaumstoffe in Form von Polyurethanintegralschaumstoffen als Zwischensohle für Sportschuhe oder als Sohlenmaterial für hochhackige Damenschuhe eingesetzt. Dabei beträgt die Dicke der Sohle an der dicksten Stelle vorzugsweise mehr als 3 cm, besonders bevorzugt mehr als 5 cm.

Weiter können erfindungsgemäße Polyurethanschäume (Polyurethanschaumstoffe) im Innenbereich von Verkehrsmitteln beispielsweise in Autos als Lenkräder, Kopfstützen oder Schaltknöpfe oder als Stuhlarmlehnen verwendet werden. Weitere Verwendungsmöglichkeiten sind als Armlehne für Stühle oder als Motorradsitze.

Die vorliegende Erfindung wird durch die folgenden Ausführungsformen und Kombinationen von Ausführungsformen, die sich aus den entsprechenden Rückbezügen und Verweisen ergeben, näher illustriert. Insbesondere ist dabei anzumerken, dass in jedem Fall, in dem ein Bereich von Ausführungsformen benannt ist, beispielsweise im Kontext eines Ausdrucks wie "Verfahren gemäß einer der Ausführungsformen 1 bis 4" jede Ausführungsform in diesem Bereich als explizit für den Fachmann offenbart gemeint ist, d.h. die Formulierung dieses Ausdrucks für den Fachmann als synonym zu "Verfahren gemäß einer der Ausführungsformen 1, 2, 3 und 4" zu verstehen ist.
1. Polyurethanschaum erhältlich oder erhalten durch Umsetzung von mindestens den Komponenten (i) bis (v):
   (i) eine Polyisocyanatzusammensetzung;
   (ii) eine Polyolzusammensetzung;
   (iii) eine Treibmittelzusammensetzung;
   (iv) eine Stabilisatorzusammensetzung umfassend mindestens 2,2-Bis(chlormethyl)trimethylen-bis(bis(2-chlorethyl)phosphat);
   (v) eine Katalysatorzusammensetzung umfassend mindestens ein tertiäres Amin.
2. Polyurethanschaum gemäß Ausführungsform 1, wobei das mindestens eine tertiäre Amin der Katalysatorzusammensetzung gemäß (v) keine gegenüber Isocyanaten reaktive Funktionalität, bevorzugt keine Funktionalität ausgewählt aus der Gruppe bestehend aus Hydroxylgruppe, primärer Aminogruppe und sekundärer Aminogruppe, weiter bevorzugt keine primäre oder sekundäre Aminogruppe, aufweist.
3. Polyurethanschaum gemäß Ausführungsform 1 oder 2, wobei das mindestens eine tertiäre Amin der Katalysatorzusammensetzung gemäß (v) ausgewählt ist aus der Gruppe bestehend aus Tributylamin, Tri-ethanolamin, Triisopropanolamin, N-methyl-diethanolamin, N-ethyl-diethanolamin, N,N-dimethylethanolamin, N-methyl-morpholin, N-ethyl-morpholin, N,N,N',N'-tetramethyl-ethylendiamin, Pentamethyldiethylentriamin; 1,4-Diaza-bicyclo-(2,2,2)-octan (Triethylendiamin, DABCO, TEDA), 1,8-Diazabicyclo[5.4.0]undec-7-en (DBU), N-methyl-N'-dimethylaminoethylpiperazin, Bis-(dimethylaminoalkyl)-piperazin, N,N-Dimethylbenzylamin, N,N-Di-methylcyclohexylamin, N,N-Diethylbenzylamin, Bis-(N,N-diethylaminoethyl)adipat, N,N,N',N'-Tetramethyl-1,3-butandiamin, N,N-Dimethyl-beta-phenylethylamin, Bis-(dimethyl-aminopropyl)harnstoff und 1,2-Dimethylimidazol, bevorzugt 1,4-Diaza-bicyclo-(2,2,2)-octan oder 1,8-Diazabicyclo[5.4.0]undec-7-en, weiter bevorzugt mindestens 1,4-Diaza-bicyclo-(2,2,2)-octan umfasst.
4. Polyurethanschaum gemäß einer der Ausführungsformen 1 bis 3, wobei die Katalysatorzusammensetzung gemäß (v) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) enthalten ist.
5. Polyurethanschaum gemäß einer der Ausführungsformen 1 bis 4, wobei das 2,2-Bis(chlormethyl)trimethylen-bis(bis(2-chlorethyl)phosphat) der Stabilisatorzusammensetzung gemäß (iv) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) enthalten ist.
6. Polyurethanschaum gemäß einer der Ausführungsformen 1 bis 5, wobei die Treibmittelzusammensetzung gemäß (iii) mindestens Wasser umfasst.
7. Polyurethanschaum gemäß einer der Ausführungsformen 1 bis 6, wobei die Polyolzusammensetzung gemäß (ii) mindestens ein Polyester- oder Polyetherpolyol, bevorzugt mindestens ein zwei bis sechs funktionales Polyester- oder Polyetherpolyol, weiter bevorzugt mindestens ein zwei bis sechs funktionales Polyesterpolyol, weiter bevorzugt mindestens ein zweifunktionales aliphatisches Polyesterpolyol, umfasst.
8. Polyurethanschaum gemäß einer der Ausführungsformen 1 bis 7, wobei die Polyisocyanatzusammensetzung gemäß (i) mindestens ein Diisocyanat, bevorzugt ausgewählt aus der Gruppe bestehend aus aliphatischen, cycloaliphatischen, araliphatischen und aromatischen Diisocyanaten, weiter bevorzugt mindestens Diphenylmethandiisocyanat (MDI), umfasst.
9. Polyurethanschaum gemäß einer der Ausführungsformen 1 bis 8, wobei die Komponenten (i) bis (iii) in einem Verhältnis enthalten sind, so dass das molare Verhältnis aus der Summe der Funktionalitäten der eingesetzten Polyolzusammensetzung (ii) und der Treibmittelzusammensetzung (iii) zu der Summe der Funktionalitäten der eingesetzten Polyisocyanatzusammensetzung (i) im Bereich von 0,4:1 bis 1,1:1, bevorzugt im Bereich von 0,5:1 bis 1,05:1, weiter bevorzugt im Bereich von 0,6:1 bis 1:1, liegt.
10. Polyurethanschaum gemäß einer der Ausführungsformen 1 bis 9, wobei weiterhin eine Kettenverlängererzusammensetzung (vi) enthalten ist, welche mindestens eine Verbindung umfasst, welche zwei gegenüber Isocyanaten reaktive Wasserstoffatome aufweist, bevorzugt ausgewählt aus der Gruppe bestehend aus 1,4-Butandiol, Monoethylenglykol, Diethylenglykol und 1,6-Hexandiol, Dipropylenglycol und Tripropylenglycol, weiter bevorzugt mindestens Monoethylenglykol.
11. Verfahren zur Herstellung eines Polyurethans, insbesondere eines Polyurethanschaums, umfassend die Umsetzung mindestens der Komponenten (i), (ii), (iii), (iv) und (v):
   (i) eine Polyisocyanatzusammensetzung;
   (ii) eine Polyolzusammensetzung;
   (iii) eine Treibmittelzusammensetzung;
   (iv) eine Stabilisatorzusammensetzung umfassend mindestens 2,2-Bis(chlormethyl)trimethylen-bis(bis(2-chlorethyl)phosphat);
   (v) eine Katalysatorzusammensetzung umfassend mindestens ein tertiäres Amin.
12. Verfahren gemäß Ausführungsform 11, wobei das mindestens eine tertiäre Amin der Katalysatorzusammensetzung gemäß (v) ausgewählt ist aus der Gruppe bestehend aus Tributylamin, Tri-ethanolamin, Triisopropanolamin, N-methyl-diethanolamin, N-ethyl-diethanolamin, N,N-dimethylethanolamin, N-methyl-morpholin, N-ethyl-morpholin, N,N,N',N'-tetramethyl-ethylendiamin, Pentamethyldiethylentriamin; 1,4-Diaza-bicyclo-(2,2,2)-octan (Triethylendiamin, DABCO, TEDA), 1,8-Diazabicyclo[5.4.0]undec-7-en (DBU),N-methyl-N'-dimethylaminoethylpiperazin, Bis-(dimethylaminoalkyl)-piperazin, N,N-Dimethylbenzylamin, N,N-Di-methylcyclohexylamin, N,N-Diethylbenzylamin, Bis-(N,N-diethylaminoethyl)adipat, N,N,N',N'-Tetramethyl-1,3-butandiamin, N,N-Dimethyl-beta-phenylethylamin, Bis-(dimethyl-aminopropyl)harnstoff und 1,2-Dimethylimidazol, bevorzugt 1,4-Diaza-bicyclo-(2,2,2)-octan oder 1,8-Diazabicyclo[5.4.0]undec-7-en, weiter bevorzugt mindestens 1,4-Diaza-bicyclo-(2,2,2)-octan (DABCO) umfasst.
13. Verfahren gemäß Ausführungsform 11 oder 12, wobei die Katalysatorzusammensetzung gemäß (v) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) eingesetzt wird.
14. Verfahren gemäß einer der Ausführungsformen 11 bis 12, wobei das 2,2-Bis(chlormethyl)-trimethylen-bis(bis(2-chlorethyl)phosphat) der Stabilisatorzusammensetzung gemäß (iv) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) eingesetzt wird.
15. Verfahren gemäß einer der Ausführungsformen 11 bis 14, wobei die Treibmittelzusammensetzung gemäß (iii) mindestens Wasser umfasst.
16. Verfahren gemäß einer der Ausführungsformen 11 bis 15, wobei die Polyolzusammensetzung gemäß (ii) mindestens ein Polyester- oder Polyetherpolyol, bevorzugt mindestens ein zwei bis sechs funktionales Polyester- oder Polyetherpolyol, weiter bevorzugt mindestens ein zwei bis sechs funktionales Polyesterpolyol, weiter bevorzugt mindestens ein zweifunktionales aliphatisches Polyesterpolyol, umfasst.
17. Verfahren gemäß einer der Ausführungsformen 11 bis 16, wobei die Polyisocyanatzusammensetzung gemäß (i) mindestens ein Diisocyanat, bevorzugt ausgewählt aus der Gruppe bestehend aus aliphatischen, cycloaliphatischen, araliphatischen und aromatischen Diisocyanaten umfasst.
18. Verfahren gemäß einer der Ausführungsformen 11 bis 17, wobei die Komponenten (i) bis (iii) in einem Verhältnis eingesetzt werden, so dass das molare Verhältnis aus der Summe der Funktionalitäten der eingesetzten Polyolzusammensetzung (ii) und des Treibmittels (iii) zu der Summe der Funktionalitäten der eingesetzten Polyisocyanatzusammensetzung (i) im Bereich von 0,4:1 bis 1,1:1, bevorzugt im Bereich von 0,5:1 bis 1,05:1, weiter bevorzugt im Bereich von 0,6:1 bis 1:1, liegt.
19. Verfahren gemäß einer der Ausführungsformen 11 bis 18, wobei weiterhin eine Kettenverlängererzusammensetzung (iv) zugesetzt wird, welche mindestens eine Verbindung umfasst, welche zwei gegenüber Isocyanaten reaktive Wasserstoffatome aufweist, bevorzugt ausgewählt aus der Gruppe bestehend aus 1,4-Butandiol, Monoethylenglykol, Diethylenglykol und 1,6-Hexandiol, Dipropylenglycol und Tripropylenglycol, weiter bevorzugt mindestens Monoethylenglykol.
20. Verfahren zur Herstellung eines Polyurethanschaums gemäß einer der Ausführungsformen 11 bis 19, wobei
   (a) Polyisocyanatzusammensetzung (i), gegebenenfalls ein Teil der Polyolzusammensetzung (ii) und mindestens ein Teil der Stabilisatorzusammensetzung (iv) vermischt und zu einem isocyanatterminierten Prepolymer umgesetzt werden, und
   (b) das erhaltene isocyanatterminierte Prepolymer gemäß (a) mit der Polyolzusammensetzung (ii) bzw. gegebenenfalls dem verbliebenen Teil der Polyolzusammensetzung (ii), Treibmittel (iii), gegebenenfalls dem verbliebenen Teil der Stabilisatorzusammensetzung (iv) und der Katalysatorzusammensetzung (v) vermischt und, gegebenenfalls in einer Form, zum Polyurethanschaum ausreagiert werden.
21. Verfahren zur Herstellung eines Polyurethanschaums gemäß einer der Ausführungsformen 11 bis 20, wobei
   (a.1) Polyisocyanatzusammensetzung (i) und Stabilisatorzusammensetzung (iv) vermischt und zu einem isocyanatterminierten Prepolymer umgesetzt werden, und
   (b.1) das erhaltene isocyanatterminierte Prepolymer gemäß (a.1) mit der Polyolzusammensetzung (ii), Treibmittel (iii) und der Katalysatorzusammensetzung (v) vermischt und, gegebenenfalls in einer Form, zum Polyurethanschaum ausreagiert werden.
22. Verfahren gemäß einer der Ausführungsformen 20 oder 21, wobei das erhaltene isocyanatterminierte Prepolymer gemäß (a) bzw. (a.1) einen NCO-Gehalt im Bereich von 1 bis 30 %, bevorzugt im Bereich von 5 bis 25 %, weiter bevorzugt im Bereich von 6 bis 23 %, weiter bevorzugt im Bereich von 10 bis 20 %, aufweist.
23. Verfahren gemäß einer der Ausführungsformen 11 bis 22, wobei weiterhin eine Kettenverlängererzusammensetzung (vi) zugesetzt wird, welche mindestens eine Verbindung umfasst, welche zwei gegenüber Isocyanaten reaktive Wasserstoffatome aufweist, bevorzugt ausgewählt aus der Gruppe bestehend aus 1,4-Butandiol, Monoethylenglykol, Dipropylenglycol und Tripropylenglycol, weiter bevorzugt mindestens Monoethylenglykol.
24. Polyurethanschaum, erhalten oder erhältlich nach dem Verfahren gemäß einer der Ausführungsformen 11 bis 23.
25. Verwendung eines Polyurethanschaums nach einer der Ausführungsformen 1 bis 10 oder eines Polyurethanschaums erhalten oder erhältlich nach dem Verfahren gemäß einer der Ausführungsformen 11 bis 23, zur Herstellung eines Schuhs oder Schuhbestandteils, bevorzugt Schuhsohle oder Bestandteil einer Schuhsohle.
26. Schuh oder Schuhbestandteil, bevorzugt Schuhsohle oder Bestandteil einer Schuhsohle, umfassend einen Polyurethanschaum nach einer der Ausführungsformen 1 bis 10 oder eines Polyurethanschaums erhalten oder erhältlich nach dem Verfahren gemäß einer der Ausführungsformen 11 bis 23.

### Angeführte Literatur

WO 2009/065826 A1;
WO 2014/16167 A1;
Kunststoffhandbuch, Band 7, Polyurethane", Carl Hanser Verlag, 3. Auflage, 1993, Kapitel 3.1., 3.2, 3.3.2, 3.4.5, 5 bis 6, Kapitel 7;
Kunststoffhandbuch, Band 7, Carl Hanser Verlag, München 1966, Seiten 103-113; Integralschaumstoff", Carl-Hanser-Verlag, München, Wien, 1975.

### BEISPIELE

### 1. Einsatzstoffe

| | |
|---|---|
| Polyol 1: | Polyesterol auf Basis von Adipinsäure, Monoethylenglycol und Diethylenglycol mit einer OH-Zahl von 56 mg KOH/g und einer Viskosität von 525 mPas bei 75°C |
| Polyol 2: | Polyesterol auf Basis von Adipinsäure, Monoethylenglycol und 1,4-Butandiol mit einer OH-Zahl von 56 mg KOH/g und einer Viskosität von 650 mPas bei 75°C |
| Polyol 3: | Polyesterol auf Basis von Adipinsäure, Monoethylenglycol, Diethylenglycol und Glycerin mit einer OH-Zahl von 60 mg KOH/g und einer Viskosität von 1150 mPas bei 75°C |
| KV1: | Monethylenglycol |
| Kat 1: | Dabco (1,4-Diaza-bicyclo-(2,2,2)-octan) gelöst in Monoethylengylcol |
| Kat 2: | Aminkatalysator DABCO® 1027 der Firma Evonik |
| Kat 3: | *N*-(3-Aminopropyl)imidazol |
| Stabi 1: | Celltech 61 (2,2-Bis(chlormethyl)trimethylen-bis(bis(2-chlorethyl)phosphat)) |
| Stabi 2: | Silikonbasierter Stabilisator Dabco DC 193® der Firma Air Products |
| ISO1: | Monomer-MDI |
| ISO2: | Monomer-MDI, enthaltend ca. 25 Gew.-% carbodiimidmodifiziertes Monomer-MDI |
| DIBIS: | Diglycol-bis-chlorformiat |

### 2. Herstellung von Prepolymeren

### 2.1 Prepolymer 1 (Prepo 1)

In einem 2 Liter 4-Halskolben mit Stickstoffeinleitung, Rührer, Kühler und Tropftrichter wurden 494,4 g ISO1, 37,6 g ISO2 und 0,15g DIBIS vorgelegt und auf etwa 60°C erwärmt. Bei 60 °C wurde ein Gemisch aus 288,1 g des Polyols 2, 99,0 g des Polyols 3, 69,3 g Propylencarbonat, 10g Diethyloxalat und 10,1 g Stabi 1 langsam über einen Zeitraum von 30 Minuten zugegeben und 2 Stunden bei 80 °C nachgerührt. Das erhaltene Prepolymer hatte einen NCO-Gehalt von 16,15 %.

### 2.2 Prepolymer 2 (Prepo 2)

In einem 2 Liter 4-Halskolben mit Stickstoffeinleitung, Rührer, Kühler und Tropftrichter wurden 494,4 g ISO 1, 37,6 g ISO 2 und 0,15g DIBIS vorgelegt und auf etwa 60°C erwärmt. Bei 60 °C wurde ein Gemisch aus 288,1 g des Polyols 2, 99,0 g des Polyols 3, 69,3 g Propylencarbonat und 10 g Stabi 1 langsam über einen Zeitraum von 30 Minuten zugegeben und 2 Stunden bei 80 °C nachgerührt. Das erhaltene Prepolymer hatte einen NCO-Gehalt von 16,20 %.

### 2.3 Prepolymer 3 (Prepo 3)

In einem 2 Liter 4-Halskolben mit Stickstoffeinleitung, Rührer, Kühler und Tropftrichter wurden 494,4 g ISO1, 37,6 g ISO2 und 0,15g DIBIS vorgelegt und auf etwa 60°C erwärmt. Bei 60 °C wurde ein Gemisch aus 288,1 g des Polyols 2, 99,0 g des Polyols 3, 69,3 g Propylencarbonat und 10g Diethyloxalat langsam über einen Zeitraum von 30 Minuten zugegeben und 2 Stunden bei 80°C nachgerührt. Das erhaltene Prepolymer hatte einen NCO-Gehalt von 16,35 %.

### 3. Herstellung von Polyurethanschaumstoffformkörpern und Depolymerisationsuntersuchung

Polyurethanschaumstoffformkörper, insbesondere Polyurethanintegralschaumstoffe, wuden nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestanden aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7.

Die Ausgangskomponenten gemäß Tabelle 1 wurden dazu bei einer Temperatur von 15 bis 90 °C, bevorzugt von 25 bis 55 °C gemischt und die Reaktionsmischung wurde, gegebenenfalls unter erhöhtem Druck, in das Formwerkzeug eingebracht. Die Vermischung wurde mechanisch mittels eines Rührers oder einer Rührschnecke oder unter hohem Druck im sogenannten Gegenstrominjektionsverfahren durchgeführt . Die Formwerkzeugtemperatur betrug 20 bis 160°C, vorzugsweise 30 bis 120 °C, besonders bevorzugt 30 bis 60 °C. Dabei wurde die Mischung der Komponenten gemäß Tabelle bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wurde so bemessen, dass die erhaltenen Integralschaumstoffe eine Dichte von 150 g/l bis 450 g/l. aufwiesen. Die Verdichtungsgrade zur Herstellung der Polyurethanintegralschaumstoffe lagen im Bereich von 1,1 bis 8,5, vorzugsweise von 1,7 bis 7,0.

Die erhaltenen Polyurethanintegralschaumstoffe wurden auf Depolymerisation mittels visueller Prüfung der Querschnitte und Größenausschlusschromatographie, sowie GPC des Polymers untersucht. Das Ergebnis jeweils für die Beispiele 1 bis 3 ist ebenfalls in Tabelle 1 wiedergegeben.

**Tabelle 1: Zusammensetzung der Polyurethanintegralschaumstoffe und Ergebnisse der Depolymerisationsuntersuchung**

| | Beispiel 1 [Gew.-%] | Beispiel 2 [Gew.-%] | Vergleich 1 [Gew.-%] |
|---|---|---|---|
| Polyol 1 | 88,3 | 88,3 | 88,3 |
| KV 1 | 8,43 | 8,43 | 8,43 |
| Kat 1 | 1,37 | 1,37 | 1,37 |
| Kat 2 | 0,59 | 0,59 | 0,59 |
| Kat 3 | 0,18 | 0,18 | 0,18 |
| Stabi 2 | 0,2 | 0,2 | 0,2 |
| Wasser | 0,4 | 0,4 | 0,4 |
| Prepo 1 | 100 | 0 | 0 |
| Prepo 2 | 0 | 100 | 0 |
| Prepo 3 | 0 | 0 | 100 |
| Depolymerisation | Nein | Nein | Ja |

## Patentansprüche

1. Polyurethanschaum erhältlich oder erhalten durch Umsetzung von mindestens den Komponenten (i) bis (v):
(i) eine Polyisocyanatzusammensetzung;
(ii) eine Polyolzusammensetzung;
(iii) eine Treibmittelzusammensetzung;
(iv) eine Stabilisatorzusammensetzung umfassend mindestens 2,2-Bis(chlormethyl)trimethylen-bis(bis(2-chlorethyl)phosphat);
(v) eine Katalysatorzusammensetzung umfassend mindestens ein tertiäres Amin.

2. Polyurethanschaum gemäß Anspruch 1, wobei das mindestens eine tertiäre Amin der Katalysatorzusammensetzung gemäß (v) keine gegenüber Isocyanaten reaktive Funktionalität, bevorzugt keine Funktionalität ausgewählt aus der Gruppe bestehend aus Hydroxylgruppe, primärer Aminogruppe und sekundärer Aminogruppe, weiter bevorzugt keine primäre oder sekundäre Aminogruppe, aufweist.

3. Polyurethanschaum gemäß Anspruch 1 oder 2, wobei das mindestens eine tertiäre Amin der Katalysatorzusammensetzung gemäß (v) ausgewählt ist aus der Gruppe bestehend aus Tributylamin, Tri-ethanolamin, Triisopropanolamin, N-methyl-diethanolamin, N-ethyl-diethanolamin, N,N-dimethylethanolamin, N-methyl-morpholin, N-ethyl-morpholin, N,N,N',N'-tetramethyl-ethylendiamin, Pentamethyldiethylentriamin; 1,4-Diaza-bicyclo-(2,2,2)-octan (Triethylendiamin, DABCO, TEDA), 1,8-Diazabicyclo[5.4.0]undec-7-en (DBU), N-methyl-N'-dimethylaminoethylpiperazin, Bis-(dimethylaminoalkyl)-piperazin, N,N-Dimethylbenzylamin, N,N-Di-methylcyclohexylamin, N,N-Diethylbenzylamin, Bis-(N,N-diethylaminoethyl)adipat, N,N,N',N'-Tetramethyl-1,3-butandiamin, N,N-Dimethyl-beta-phenylethylamin, Bis-(dimethyl-aminopropyl)harnstoff und 1,2-Dimethylimidazol, bevorzugt 1,4-Diaza-bicyclo-(2,2,2)-octan oder 1,8-Diazabicyclo[5.4.0]undec-7-en, weiter bevorzugt mindestens 1,4-Diaza-bicyclo-(2,2,2)-octan umfasst.

4. Polyurethanschaum gemäß einem der Ansprüche 1 bis 3, wobei die Katalysatorzusammensetzung gemäß (v) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) enthalten ist.

5. Polyurethanschaum gemäß einem der Ansprüche 1 bis 4, wobei das 2,2-Bis(chlormethyl)-trimethylen-bis(bis(2-chlorethyl)phosphat) der Stabilisatorzusammensetzung gemäß (iv) in einem Anteil im Bereich von 0,01 bis 20 Gewichts-%, bevorzugt im Bereich von 0,1 bis 10 Gewichts-%, weiter bevorzugt im Bereich von 0,5 bis 5 Gewichts-%, bezogen auf das Gesamtgewicht der Komponenten (ii), (iii), (iv) und (v) enthalten ist.

6. Polyurethanschaum gemäß einem der Ansprüche 1 bis 5, wobei die Treibmittelzusammensetzung gemäß (iii) mindestens Wasser umfasst.

7. Polyurethanschaum gemäß einem der Ansprüche 1 bis 6, wobei die Polyolzusammensetzung gemäß (ii) mindestens ein Polyester- oder Polyetherpolyol, bevorzugt mindestens ein zwei bis sechs funktionales Polyester- oder Polyetherpolyol, weiter bevorzugt mindestens ein zwei bis sechs funktionales Polyesterpolyol, weiter bevorzugt mindestens ein zweifunktionales aliphatisches Polyesterpolyol, umfasst.

8. Polyurethanschaum gemäß einem der Ansprüche 1 bis 7, wobei die Polyisocyanatzusammensetzung gemäß (i) mindestens ein Diisocyanat, bevorzugt ausgewählt aus der Gruppe bestehend aus aliphatischen, cycloaliphatischen, araliphatischen und aromatischen Diisocyanaten, weiter bevorzugt mindestens Diphenylmethandiisocyanat (MDI), umfasst.

9. Polyurethanschaum gemäß einem der Ansprüche 1 bis 8, wobei die Komponenten (i) bis (iii) in einem Verhältnis enthalten sind, so dass das molare Verhältnis aus der Summe der Funktionalitäten der eingesetzten Polyolzusammensetzung (ii) und der Treibmittelzusammensetzung (iii) zu der Summe der Funktionalitäten der eingesetzten Polyisocyanatzusammensetzung (i) im Bereich von 0,4:1 bis 1,1:1, bevorzugt im Bereich von 0,5:1 bis 1,05:1, weiter bevorzugt im Bereich von 0,6:1 bis 1:1, liegt.

10. Polyurethanschaum gemäß einem der Ansprüche 1 bis 9, wobei weiterhin eine Kettenverlängererzusammensetzung (vi) enthalten ist, welche mindestens eine Verbindung umfasst, welche zwei gegenüber Isocyanaten reaktive Wasserstoffatome aufweist, bevorzugt ausgewählt aus der Gruppe bestehend aus 1,4-Butandiol, Monoethylenglykol, Diethylenglykol und 1,6-Hexandiol, Dipropylenglycol und Tripropylenglycol, weiter bevorzugt mindestens Monoethylenglykol.

11. Verfahren zur Herstellung eines Polyurethans, insbesondere eines Polyurethanschaums, umfassend die Umsetzung mindestens der Komponenten (i), (ii), (iii), (iv) und (v):
(i) eine Polyisocyanatzusammensetzung;
(ii) eine Polyolzusammensetzung;
(iii) eine Treibmittelzusammensetzung;
(iv) eine Stabilisatorzusammensetzung umfassend mindestens 2,2-Bis(chlormethyl)trimethylen-bis(bis(2-chlorethyl)phosphat);
(v) eine Katalysatorzusammensetzung umfassend mindestens ein tertiäres Amin.

12. Verfahren zur Herstellung eines Polyurethanschaums gemäß Anspruch 11, wobei
(a) Polyisocyanatzusammensetzung (i), gegebenenfalls ein Teil der Polyolzusammensetzung (ii) und mindestens ein Teil der Stabilisatorzusammensetzung (iv) vermischt und zu einem isocyanatterminierten Prepolymer umgesetzt werden, und
(b) das erhaltene isocyanatterminierte Prepolymer gemäß (a) mit der Polyolzusammensetzung (ii) bzw. gegebenenfalls dem verbliebenen Teil der Polyolzusammensetzung (ii), Treibmittel (iii), gegebenenfalls dem verbliebenen Teil der Stabilisatorzusammensetzung (iv) und der Katalysatorzusammensetzung (v) vermischt und, gegebenenfalls in einer Form, zum Polyurethanschaum ausreagiert werden.

13. Polyurethanschaum, erhalten oder erhältlich nach dem Verfahren gemäß Anspruch 11 oder 12.

14. Verwendung eines Polyurethanschaums nach einem der Ansprüche 1 bis 10 oder eines Polyurethanschaums erhalten oder erhältlich nach dem Verfahren gemäß e Anspruch 11 oder 12, zur Herstellung eines Schuhs oder Schuhbestandteils, bevorzugt Schuhsohle oder Bestandteil einer Schuhsohle.

15. Schuh oder Schuhbestandteil, bevorzugt Schuhsohle oder Bestandteil einer Schuhsohle, umfassend einen Polyurethanschaum nach einem der Ansprüche 1 bis 10 oder eines Polyurethanschaums erhalten oder erhältlich nach dem Verfahren gemäß Anspruch 11 oder 12.
